Europäisches Patentamt

European Patent Office

Office européen des brevets

(11) Veröffentlichungsnummer: **0 047 362**
**A1**

## EUROPÄISCHE PATENTANMELDUNG

(21) Anmeldenummer: 81104448.6

(51) Int. Cl.³: **B 23 B 5/12**

(22) Anmeldetag: **10.06.81**

(30) Priorität: **23.08.80 DE 3031871**

(43) Veröffentlichungstag der Anmeldung: **17.03.82**
**Patentblatt 82/11**

(84) Benannte Vertragsstaaten: **AT BE CH DE FR GB IT LI LU NL SE**

(71) Anmelder: **Th. Kieserling & AlbrechtGmbH & Co. KG,**
**Postfach 10 07 45 Birkenweiher, D-5650 Solingen 1 (DE)**

(72) Erfinder: **Lorenz, Horst, Hossenhauser Strasse 15,**
**D-5650 Solingen 1 (DE)**
Erfinder: **Koch, Rolf-Eckart, Altenbacher Weg 16,**
**D-5653 Leichlingen 2 (DE)**
Erfinder: **Riedel, Franz, Alfred-Nobelstrasse 19,**
**D-5650 Solingen-Wald (DE)**

(54) **Schälmaschine.**

(57) Die Erfindung bezieht sich auf eine Schälmaschine (1) für metallische Stangen (2), Rohre und Draht mit einer umlaufenden Hohlwelle (5). An der Hohlwelle ist einlaufseitig ein Messerkopf (6) angebracht, der ein oder mehrere radial verstellbare Schälmesser (7, 8) trägt. Die Schälmesser sind während des Laufs der Schälmaschine verstellbar. Die Verstellung erfolgt über einen Elektromotor (32). Zwischen Elektromotor und Schälmessern ist ein Getriebe (14) vorgesehen, das alle Schälmesser gleichzeitig radial verstellt, das konzentrisch zur Hohlwelle angeordnet ist und das die Hohlwelle einschließt und mit dieser umläuft. Das Getriebe ist vorzugsweise als Planeten-Differential-Getriebe ausgebildet. Das Getriebe ist zwischen oder vor zwei Radiallagern (3, 4) der Hohlwelle (5) angeordnet und einerseits über eine Hülse (48) mit einer Scheibe (21) für die Messerverstellung und andererseits über die Hohlwelle (5) mit dem Messerkopf (6) verbunden.

## Schälmaschine

Die Erfindung bezieht sich auf eine Schälmaschine gemäß dem Oberbegriff von Anspruch 1.
Bei Schälmaschinen der vorgenannten Art ist das Problem der Messerverstellung während des Laufs der Hohlwelle noch nicht zufriedenstellend gelöst. Die Radialkräfte an den Messerhaltern (das sind Schnittkräfte und Fliehkräfte) gegen die die Verstellung erfolgen muß, sind so groß, daß die daraus resultierenden Drehmomente stark untersetzt werden müssen.

Bei einer bekannten Schälmaschine, (DE-PS 17 52.341) ist zur Übersetzung der Bewegung der Schälmesser für jedes Messer ein Schneckengetriebe, kombiniert mit einem Differentialgewinde, vorgesehen. Diese Lösung ist baulich aufwendig. Es ist dort eine Vielzahl von Getrieben erforderlich. Die Beherrschung der dynamischen Kräfte dieser rotierenden Massen ist theoretisch und praktisch schwierig. Die Getriebe sind, wie die Schälmesser selbst, an einer Stirnseite der Hohlwelle, d.h. abkragend und außerhalb der Radial-Lager angeordnet, wodurch der Abstand des einlaufseitigen Radiallagers von der Schnittebene groß wird.

Der Erfindung liegt demgegenüber die Aufgabe zugrunde, ein Untersetzungsgetriebe zur Messerverstellung so auszubilden, daß der bauliche Aufwand gering wird, die Steifigkeit der Hohlwelle und die des Mechanismus zur Verstellung der Messer verbessert wird und eine hohe Drehzahl derselben möglich wird.

TH. KIESERLING & ALBRECHT, Solingen          (K 240)

-7-

Die erfindungsgemäße Lösung dieser Aufgabe ist im kennzeichnenden Teil von Anspruch 1 wiedergegeben. Dadurch erhält das Getriebe radial auf die Hohlwelle bezogen, eine minimale Baugröße. Bei einer Anordnung des Getriebes zwischen den Radiallagern der Hohlwelle, wird der abkragende stirnseitige Abschnitt der Hohlwelle, an dem der Messerkopf sitzt, verkürzt. Alternativ ist das Untersetzungsgetriebe vor den Hohlwellenlagern, direkt am Messerkopf vorgesehen. Der Verstellmechanismus wird so steifer. Die Zugänglichkeit zu der Messerverstellung wird verbessert.

Vorzugsweise ist eine Ausgestaltung der Erfindung nach Anspruch 2 vorgesehen. Dabei wird eine bessere Zugänglichkeit des Getriebes erreicht, der Durchmesser der Hohlwelle und damit der zugehörigen Lager wird nicht vergrößert. Diese Anordnung bietet einen guten Schutz gegen Späne, Kühlflüssigheit und Zunder, die die Funktion des Getriebes stören könnten.

Eine nach der Erfindung bevorzugte Ausführungsform ist in Anspruch 3 wiedergegeben. Diese Getriebe lassen sich auf einfache Weise ringförmig ausbilden. Die Forderung nach einer hohen Übersetzung läßt sich vorteilhaft durch ein Planeten-Differential-Getriebe erfüllen.

-8-

0047362
(K 240)

-8-

Das Merkmal von Anspruch 4 erlaubt es, das Planetenrad punktsymmetrisch zur Hohlwellendrehachse auszubilden, so daß dadurch keine Unwuchten entstehen können.
Das oval aufgespannte Planetenrad paßt an seinen Stellen
größten Durchmessers genau in das Sonnenrad hinein.
An den Stellen kleinsten Durchmessers sind die Zähne
von Planetenrad und Sonnenrad außer Eingriff.

Alternativ kann das Getriebe entsprechend Anspruch
5 ausgebildet sein. Nach dieser Ausgestaltung der Erfindung wird eine Unwucht durch die paarweise Anordnung von
Planetenrädern vermieden.

Bei der bevorzugt vorgesehenen Ausgestaltung der Erfindung nach Anspruch 6 ergibt sich die Vereinfachung,
daß die Drehachse der Verstellschräge für die Messerhalter und die Drehachse des zugehörigen Sonnenrades
zusammenfallen und somit die erforderliche Verbindung
zwischen beiden einfach hergestellt werden kann.

Eine weitere vorteilhafte Getriebeausführung ist
in Anspruch 7 wiedergegeben. Der Vorzug dieser Ausführung
ist darin zu sehen, daß ihre Herstellung einfach und
kostengünstig ist.

Die Ausführungsform nach Anspruch 8 stellt eine
Zwischenlösung zwischen der Anordnung des Getriebes vor
dem vorderen Hohlwellenlager und der zwischen den beiden
Hohlwellenlager dar. Sie vermeidet die Nachteile der
einen Lösung und verbindet damit die Vorteile der anderen
Lösung zumindest teilweise.

-9-

　　　　　　　00473̈62 (K 240)

Das vordere Hohlwellenlager rückt näher an die Messerebene heran, jedoch ist eine Durchführung der Verstellbewegung zwischen dem vorderen Hohlwellenlager und
der Hohlwelle selbst überflüssig.

Die konkrete Ausgestaltung dieser Zwischenlösung ist
in Anspruch 9 wiedergegeben.

Die in Anspruch 10 beschriebene Ausführungsform der
Erfindung wird insbesondere bei Maschinen zum Schälen
dicker Wellen Anwendung finden, da die Lagerung der
langsamer laufenden Maschinen für dicke Wellen
unkritisch ist. Bei kleineren Schälmaschinen, z. B.
bei Drahtschälmaschinen, wird vorzugsweise das
Untersetzungsgetriebe zwischen vorderem Hohlwellenlager
und Messerkopf angeordnet sein, bzw. entsprechend
Anspruch 8 und 9 beidseits des vorderen Hohlwellenlagers vorgesehen sein.

Wegen der zu fordernden großen Untersetzung, bei der dann
das Planetenrad fast so groß ist wie das Sonnenrad, wird
die in Anspruch 11 gewählte Ausführung gewählt, da
Sonnenrad und Planetenrad ringförmig um die Hohlwelle
gelegt werden können.

Eine weitere Ausgestaltung der Erfindung ist in Anspruch
12 wiedergegeben.

Die Getriebe selbst sind zumindest teilweise bekannt,
vergleiche z.B. DE-PS 1135 259. Hierfür wird kein
selbstständiger Schutz angestrebt.

Die Erfindung wird nachstehend an Hand der Zeichnung
beschrieben. Es zeigen:

-10-

Fig. 1    eine Schälmaschine schematisch im Längsschnitt

Fig. 2    eine Schälmaschine nach Fig. 1 im Querschnitt gemäß Linie II-II

Fig. 3    eine Schälmaschine entsprechend Fig. 1
mit einem anderen Getriebe

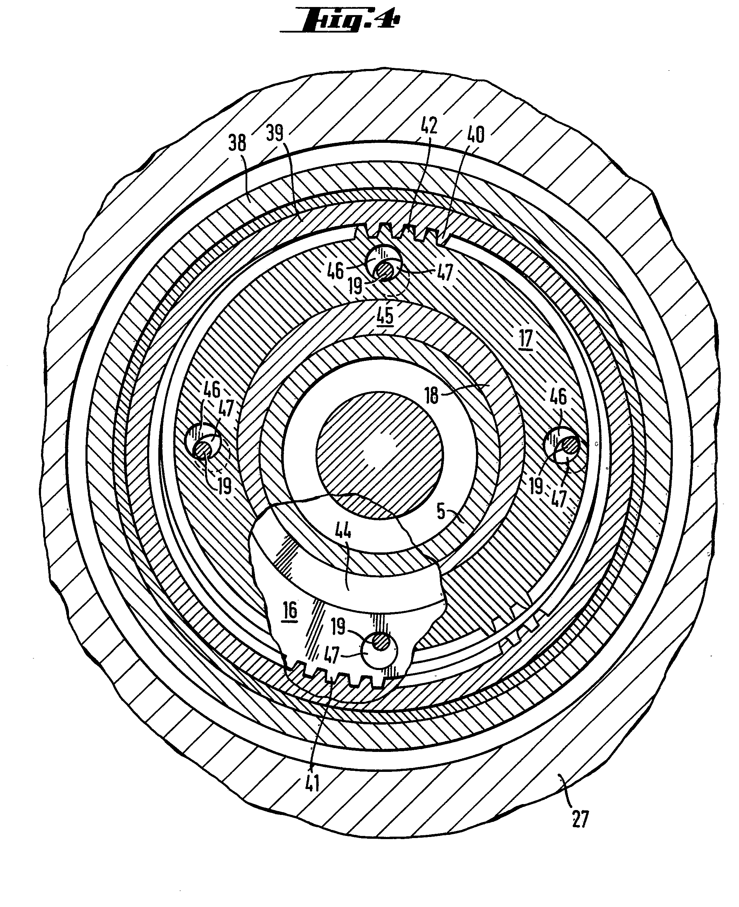

Fig. 4    die Schälmaschine nach Fig. 3 im Querschnitt gemäß Linie IV...IV

Fig. 5    eine Stirnansicht des Messerkopfes ohne
Messerhalter.

Fig. 6    einen Schälmaschinen-Längsschnitt mit einem
anderen Planetengetriebe und einer anderen
Getriebeanordnung.

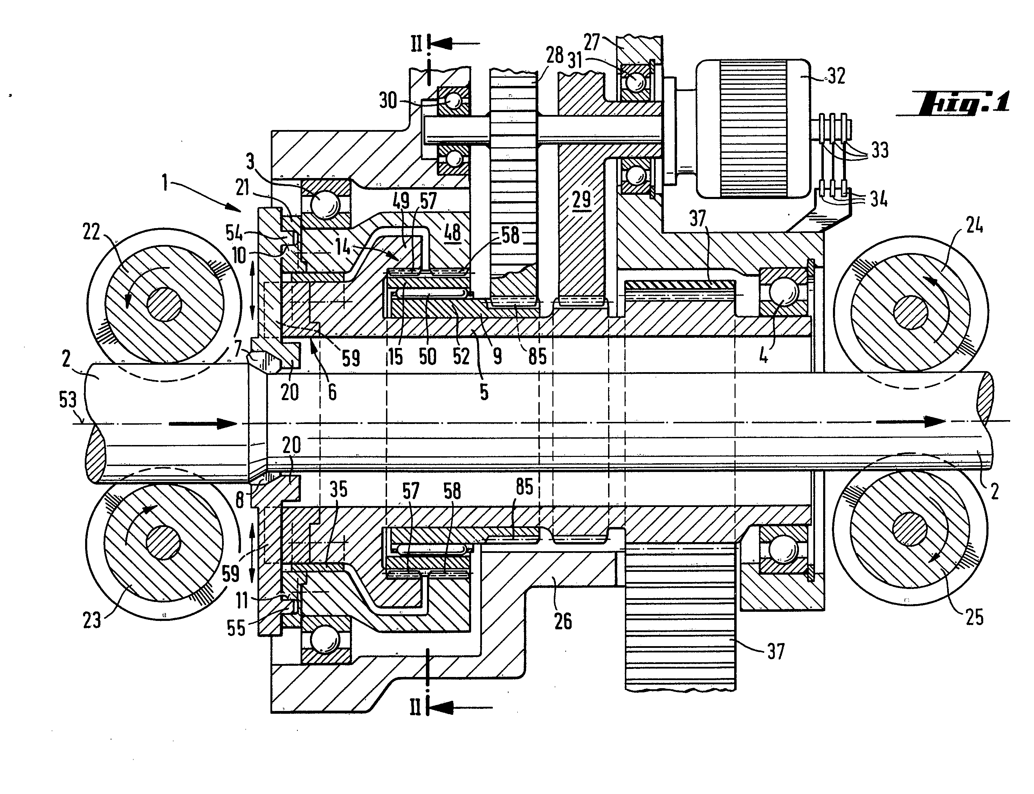

Figur 1 zeigt eine Schälmaschine 1, in der die Stange
2 von den Treib- und Führungsrollen 22,23 einlaufseitig
und von den Rollen 24, 25 auslaufseitig entsprechend ihrer
Längsachse, in der Zeichnung von links nach rechts, vorbewegt, drehfest gehalten und dabei von den Schälmessern
7 und 8 drehgeschält wird. Die Schälmesser sind in Halter
20 eingespannt, die im rotierenden Messerkopf 6 radial
verstellbar sind. Der Messerkopf ist stirnseitig an der
Hohlwelle 5 befestigt, die in Radiallagern 3, 4 im Maschinengestell 26 drehbar gelagert ist. Die Hohlwelle 5 wird über
einen Zahnriemen 37 von einem nicht dargestellten Motor
angetrieben.

Die Messerhalter 20 mit den daran befestigten Schälmessern
7, 8 sind während des Laufs der Hohlwelle verstellbar.
Die Verstellung der Schälmesser erfolgt durch eine
Relativdrehung zwischen dem starr mit der
Hohlwelle verbundenen Messerkopf 6 in dem die Schälmesserhalter 20 in Ausnehmungen 59 radial geführt sind und
einer drehbaren Scheibe 21 in die, entsprechend der Zahl der

0047362

(K 240)

-11-

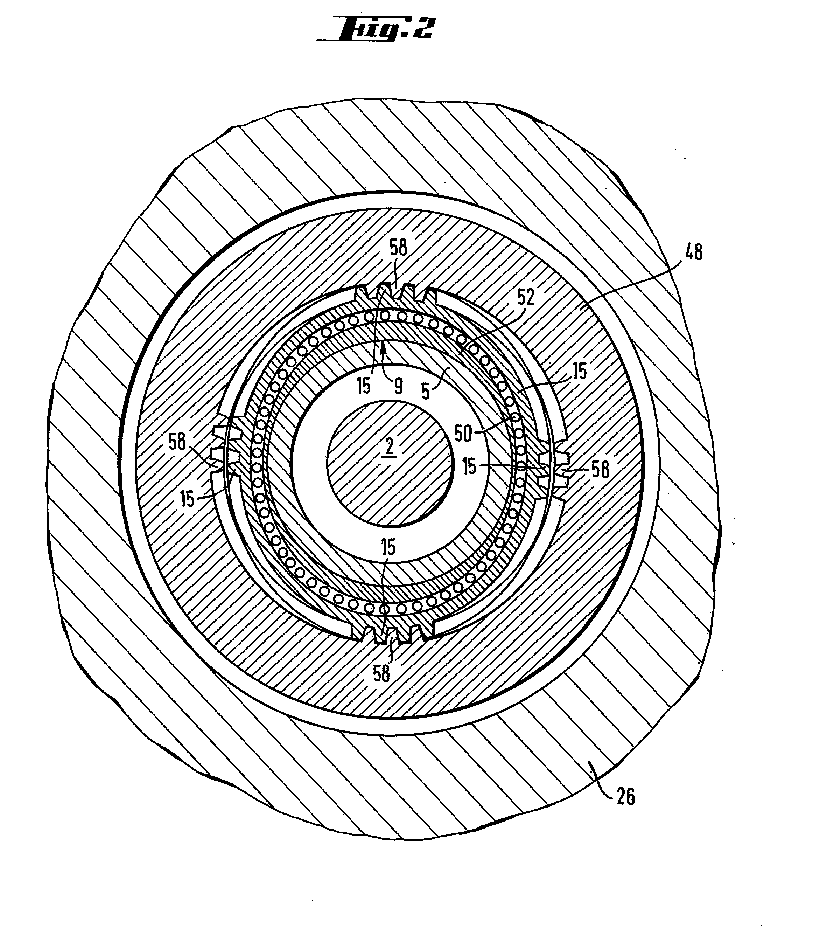

Schälmesser, spiralförmige Verstellschrägen 10,11,12,13 eingearbeitet sind. In diese als spiralförmige Nuten ausgebildeten Verstellschrägen greift je ein an den Messerhaltern rückwärtig angeformter Zapfen 54, 55 ein. Bei einer Relativdrehung zwischen der Scheibe 21 und dem mit der Hohlwelle starr verbundenen Messerkopf 6 verschieben sich die Messer radial und verändern so den Fertigdurchmesser der Stange 2. Diese Relativdrehung wird bei dem Ausführungsbeispiel nach den Figuren 1 und 2 durch den Überwurf 49, durch die abgesetzte Hülse 48, die ein 2. Sonnenrad darstellt, durch ein elastisch verformbares außenverzahntes Planetenrad 15, durch eine Buchse 9[x)] mit einem ovalen Ringbund 52 (vergleiche Fig. 2), durch Zahnräder 28, 29, die in Lagern 30, 31 drehbar im Maschinengestell aufgenommen sind und schließlich durch einen mit den Zahnrädern umlaufenden Elektromotor 32, erzielt. Der Motor ist über Schleifringe 33 und Abnehmer 34 von einem nicht dargestellten Schaltpult der Schälmaschine aus steuerbar. Solange die Messer nicht verstellt werden, laufen die Zahnräder 28, 29 mit gleicher Drehgeschwindigkeit um, d.h., der umlaufende Motor 32 ist stromlos bzw. gebremst. Wenn die Schälmesser verstellt werden sollen, werden die Zahnräder 28, 29 durch den Motor 32 relativ zueinander verdreht. Das führt zu einer Drehung der Buchse 9 auf der Hohlwelle 5. Auf dem oval ausgebildeten Ringbund 52 läuft ein Kranz von Wälzkörpern 50 um. Um diese Wälzkörper ist ein elastisch oval verformter Zahnring, der die Funktion eines Planetenrades 15 hat, gelegt. Dieser Zahnring greift sowohl in die Innenverzahnung 57 des Überwurfs 49 als auch

-12-

[x)] mit einem Zahnkranz 85

0047362
(K 240)

-12-

in die Innenverzahnung 58 der Hülse 48 ein. Die beiden auf dem Überwurf 49 und auf der Hülse 48 ausgebildeten Innenverzahnungen 57, 58, haben bei gleichem Modul und gleichem Teilkreis-∅ eine dem Untersetzungsverhältnis entsprechende verschiedene Zähnezahl. Das Untersetzungsverhältnis kann z. B. 1:100 sein. Wenn die Zähnezahlen der Verzahnungen 57, 58 z. B. 198 und 200 betragen und die Zähnezahl des Planetenrades 198 beträgt, so verdrehen sich die Scheibe 21, die mit der Hülse 48 verbunden ist, und der mit dem Messerkopf starr verbundene Überwurf 49 um 1/100 Umdrehung gegeneinander.

Durch diese Verdrehung der Scheibe 21 gegenüber dem Messerkopf 6 verschieben sich alle Schälmesser gleichmäßig auf die Stange 2 zu bzw. von dieser weg.

Die besonderen baulichen Vorteile des Getriebes 14 ergeben sich aus dessen Ausbildung als Planetengetriebe. Das Vermeiden von Unwuchten wurde dadurch möglich, daß das Getriebe um die Hohlwelle gelegt wurde und diese konzentrisch einschließt. Zudem konnte durch diese Maßnahmen die Baugröße des Getriebes, gemessen als maximaler radialer Abstand von der Dreh- und Längsachse 53 der Hohlwelle 5, sehr klein gehalten werden. Dadurch sind hohe Drehzahlen möglich. Durch die konzentrische Anordnung der Scheibe 21 und der abgesetzten Hülse 48 ist es auf einfache Weise möglich, die Drehbewegung für die Messerverstellung von dem Getriebe 14, auf die Scheibe 21 zu übertragen. Weiterhin ist es dadurch möglich, das Getriebe 14 zwischen den beiden Radiallagern 3 u. 4 anzuordnen und dadurch den Abstand der Schnittebene von dem vorderen Radiallager 3 minimal zu gestalten und somit die Steifigkeit der Hohlwelle deutlich zu erhöhen.

-13-

-13-

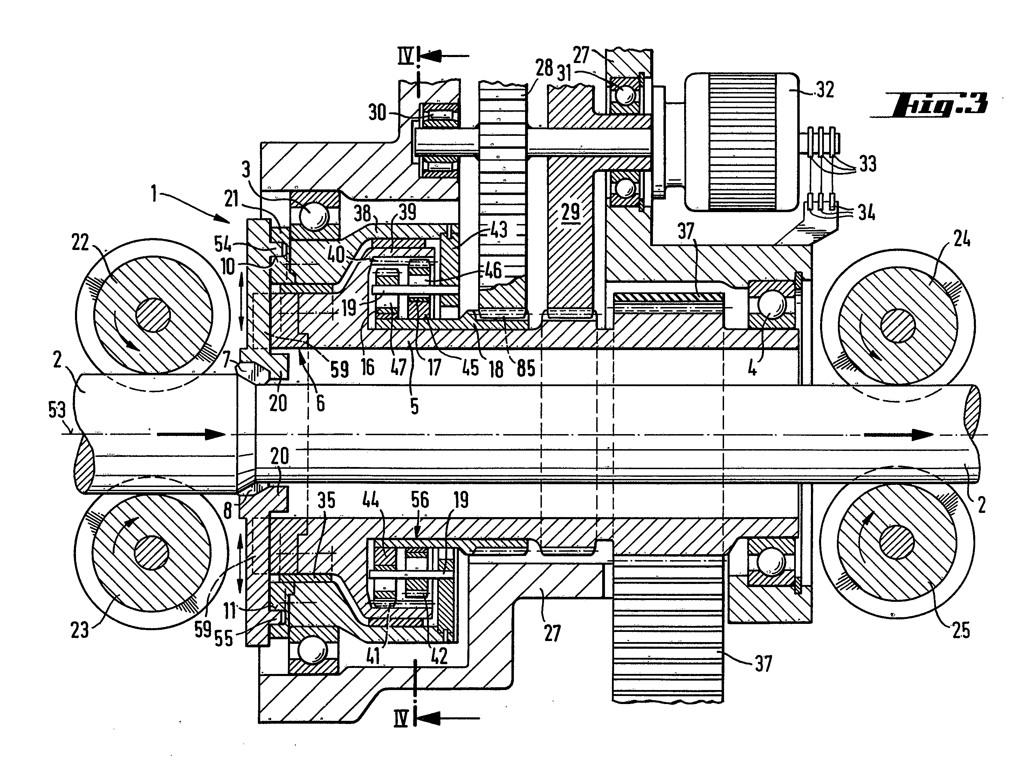

Die Schälmaschine gem. Fig. 3 unterscheidet sich von der nach Fig. 1 durch das Untersetzungsgetriebe 56. Die Erfindung kann danach auch durch ein anderes Planetengetriebe ausgeführt werden. Die entstehende Unwucht des als Ring 17 ausgebildeten Planetenrades, wird durch die Unwucht des mit gleichgroßer, entgegengesetzter Exzentrität angeordneten als Planetenrad ausgebildeten Ringes 16 kompensiert.

Die Ringe 16 und 17 haben Außenverzahnungen 41, 42, die mit der Innenverzahnung 40 des als Sonnenrad ausgebildeten Überwurfs 39 im Eingriff stehen. Wird die Buchse 18 gedreht, so wälzen sich die Ringe 16 und 17 durch die exzentrischen Bunde 44, 45 auf derselben in dem als Sonnenrad ausgebildeten Überwurf 39 ab. Die daraus resultierende Eigendrehung der Ringe 16, 17 wird von als Stiften ausgebildeten Stirnmitnehmern 19, die in Bohrungen 46, 47 der Ringe 16, 17 eingreifen, über die Stirnplatte 43 auf die als Sonnenrad ausgebildete Hülse 38 und auf die Scheibe 21 mit den spiralförmigen Verstellschrägen 10 bis 13 übertragen. Auch dieses Getriebe ist zwischen den Radiallagern 3 und 4, in denen die Hohlwelle 5 im Maschinengestell 27 gelagert ist, aufgenommen und durch eine Hülse mit der Scheibe 21 verbunden.

Die Verbindung mit der in den Figuren 1 und 2 dargestellten Schälmaschine angeführten Vorteile treffen auf die hier zuletzt beschriebene Maschine gleichermaßen zu.

-14-

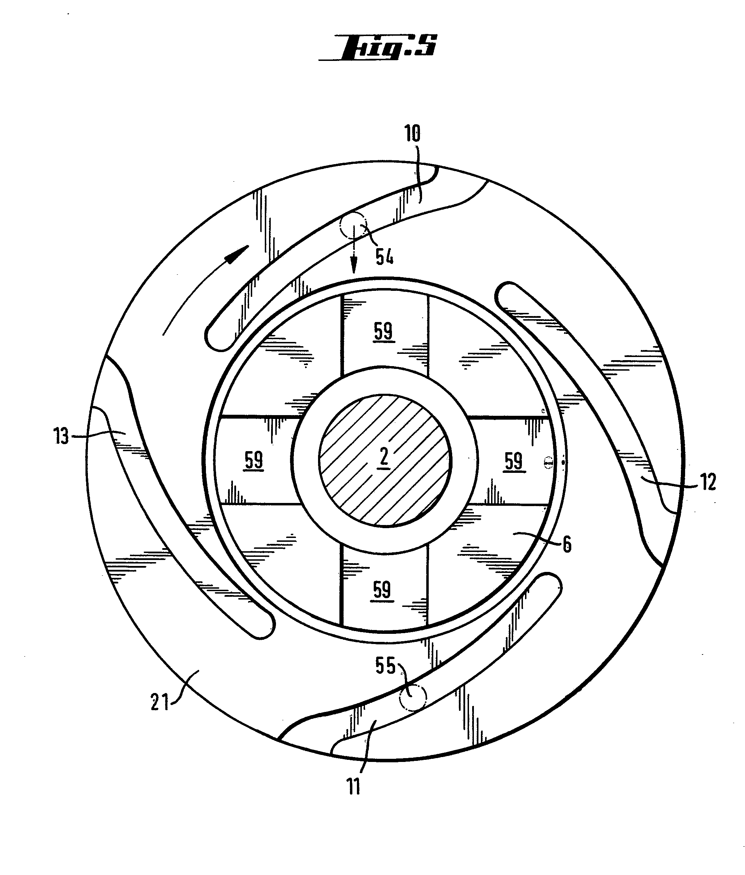

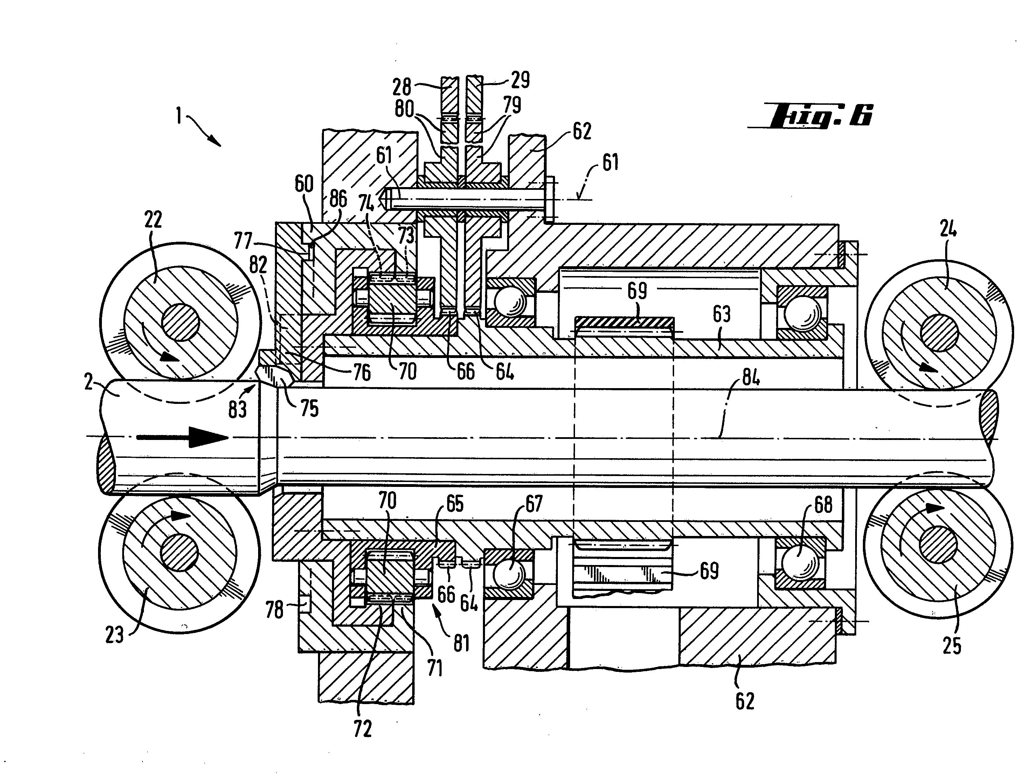

In Figur 6 wird ein Untersetzungsgetriebe 81 gezeigt,
das vor dem vorderen Hohlwellenlager 67 angeordnet ist.
Auch hier rotiert eine Hohlwelle 63 , die über Lager
67, 68 im Maschinengehäuse 62 abgestützt ist. Vorne,
d.h. einlaufseitig an der Hohlwelle 63 ist der Messerkopf 83 angebracht, der aus mehreren Schälmessern
75 besteht, die in Haltern 76 festgeklemmt sind.
Die Halter weisen an ihren radial äußeren Enden
Zapfen 77 auf, die in Spiralnuten 78 eingreifen.
Diese sind vergleichbar mit den als Spiralnuten ausgeführten Verstellschrägen 10 bis 13 in Figur 5.
Die Spiralnuten 78 sind in einer gegenüber der Hohlwelle zentrisch drehbaren Scheibe 60 ausgebildet.

Die Hohlwelle 63 wird von einem nicht dargestellten Motor über einen Antriebszahnriemen 69
in Rotation versetzt. Auf der Hohlwelle 63, vor dem
einlaufseitigen Lager 67, ist eine Buchse 65 drehbar gelagert. In die Buchse sind tangential Taschen
eingefräst, so daß sich sektorweise ein im wesentlichen
U-förmiges Profil der Buchse ergibt. In einer solchen
Tasche der Buchse ist ein Planetenzahnrad 70 drehbar
aufgenommen. Vorzugsweise sind zwei solcher Planetenzahnräder vorgesehen, die symmetrisch zur Drehachse
der Hohlwelle angeordnet sind. Mit diesen Planetenzahnrädern kämmen zwei Sonnenräder 71, 72, die mit ihren
Verzahnungen 73, 74 in die Verzahnung des Planetenrades 70 eingreifen. Das Sonnenrad 71 ist starr mit der
Scheibe 60 mit den spiralnutenförmigen Verstellschrägen
verbunden. Das Sonnenrad 72 ist starr mit der Hohlwelle
63 verbunden.

-15-

Die einstückige Darstellung der Sonnenräder mit der
Scheibe und mit der Hohlwelle soll dem besseren Verständnis dienen, auch wenn aus Fertigungsgründen eine
mehrteilige Ausführung und anschließende Verbindung
mit Schrauben oder ähnlichem notwendig ist.
Die Buchse 65 weist an ihrem der Messerseite abgewandten Ende einen Zahnkranz 66 auf, in den ein Zwischenrad 80 eingreift. Parallel dazu ist an der Hohlwelle
ein Zahnkranz 64 vorgesehen, in den ein Zwischenrad 79
eingreift. Beide Zwischenräder sind im Maschinengehäuse
62 ortsfest gelagert und drehen sich um die Achse 61.
Zusätzlich greifen in die Zwischenräder 79, 80 die
Zahnräder 28,29 ein, die durch einen nicht mehr dargestellten Motor, wie in Figur 3 gezeigt, gesteuert werden.

Zur Verstellung der radialen Lage der Messer wird der
Messerkopf 83 an der Hohlwelle 63 in dem der Halter 76
radial in einer Gleitführung 82 verschiebbar gehalten
ist, gegen die Scheibe 60, in deren spiralförmiger Nut
der Zapfen 77 des Messerhalters 76 eingreift, verschwenkt.
Durch die spiralförmige Nut wird der Messerhalter dabei
radial verschoben.
Die Verzahnungen 73, 74 haben unterschiedliche
Zähnezahlen. Wenn die Buchse 65 auf der Hohlwelle 63
gedreht wird, und mit ihr das Planetenzahnrad 70,
resultiert eine entsprechend dem Zähnezahlverhältnis
der Verzahnungen 73, 74 ausfallende Verdrehung der
beiden Sonnenräder. Das Planetenzahnrad weist im gezeigten Fall eine einheitliche Verzahnung über seine
gesamte Länge auf.

-16-

TH. KIESERLING & ALBRECHT, Solingen          (K 240)

-16-

Es ist unschwer zu erkennen, daß das Zahnrad 29
und das Zwischenrad 79 auch auf der anderen Seite
des vorderen Hohlwellenlagers 67 angeordnet sein könnten,
ohne dadurch Ausbildung und Wirkung der erfindungsgemäßen Messerverstellung wesentlich zu verändern.
Der Abstand zwischen dem vorderen Hohlwellenlager und
der Messerebene wird dadurch verkürzt, die Hohlwelle
wird so steifer.

Beim Betrieb der Schälmaschine ohne Verstellung der
Messer, laufen die Buchse 65 und die Hohlwelle ohne
Relativbewegung, um die Drehachse 84 der Hohlwelle 63 um.
Die radiale Messerverstellung während des Umlaufs der
Hohlwelle wird eingeleitet durch eine Relativbewegung
zwischen der Buchse 65 und der Hohlwelle 63. Beim
gezeigten Ausführungsbeispiel in Figur 6, bei dem die
Zwischenräder 79, 80 gleich groß gewählt wurden, entspricht dies einer Relativbewegung zwischen diesen
Zwischenrädern. Diese Relativbewegung der Zwischenräder
bzw. von Hohlwelle 63 und Buchse 65 kann ebensogut durch
einen Differentialgetriebe, das anstelle des mitumlaufenden,
in Figur 1 gezeigten Motors 32 tritt, bewirkt werden.

0047362

(K 240)

-2-

<u>Patentansprüche</u>

1.) a) Schälmaschine für runde Stangen (2), Rohre und Draht

 b) mit einer in mindestens zwei Radial-Lagern (3,4) gehaltenen umlaufenden Hohlwelle (5)

 c) mit einem stirnseitig daran angeordneten Messerkopf (6) und

 d) daran radial zur Drehachse der Hohlwelle verschiebbaren Schälmessern (7,8),

 e) einem auf der Hohlwelle drehbar gelagerten Zahnkranz (85), dessen Bewegung während des Laufs der der Hohlwelle steuerbar ist, und

 f) der mit den Verstellschrägen (10 bis 13) der Schälmesser in getrieblicher Verbindung steht

 g) wobei die steuerbare Bewegung des Zahnkranzes (85) an der umlaufenden Hohlwelle zu den Verstellschrägen (10) stark untersetzt wird.
 (i ≥ 20)

 dadurch gekennzeichnet, daß

 h) nur ein Untersetzungsgetriebe (14) für alle Schälmesser (7,8) vorgesehen ist,

 i) das konzentrisch zur Hohlwelle (5) angeordnet ist

 k) und das ringförmig an die Hohlwelle angelegt ist

2.) Schälmaschine nach Anspruch 1, dadurch gekennzeichnet, daß das Getriebe (14) die Hohlwelle (5) umschließt.

-3-

TH. KIESERLING & ALBRECHT, Solingen (K 240) 0047362

-3-

3.) Schälmaschine nach Anspruch 1 und 2, dadurch gekennzeichnet, daß das Untersetzungsgetriebe (14,56) nach Art eines Planeten-Differential-Getriebes ausgebildet ist.

4.) Schälmaschine nach Anspruch 1 bis 3 und 12, dadurch gekennzeichnet, daß das Planetenrad (15) elastisch oval verformt wird und auf einem im Querschnitt entsprechend oval ausgeformten zur Hohlwellendrehachse (53) zentrischen Ringbund (52) gleitet.

5.) Schälmaschine nach Anspruch 1 bis 3, dadurch gekennzeichnet, daß

a) das Planetenrad aus mehreren Ringen (16,17) besteht,

b) die auf exzentrischen Bunden (44,45) der Buchse (18) drehbar gelagert sind,

c) wobei bei mehreren Ringen deren Exzentrizitäten gleich groß und symmetrisch um die Drehachse der Hohlwelle (5) verteilt angeordnet sind, und

d) wobei der bzw. die Ringe über Stirnmitnehmer (19), die gleichen Abstand zur Hohlwelle aufweisen, mit den Verstellschrägen (10,13) für die Messerhalter formschlüssig verbunden sind und wobei

e) das Sonnenrad (39) mit dem Messerkopf (6) verbunden ist.

6.) Schälmaschine nach den Ansprüchen 1 bis        , dadurch gekennzeichnet, daß

-4-

0047362

TH. KIESERLING & ALBRECHT, Solingen                    (K 240)

-4-

a) die Verstellschrägen (78) für die Messerhalter (76) im Bereich des Messerkopfes (83) an einer auf der Hohlwelle (63) drehbaren Scheibe (60) ausgebildet sind, die in einer Querebene der Hohlwelle (63), stirnseitig konzentrisch an derselben angeordnet ist und mit dem Getriebe (81) verbunden ist und daß

b) an dieser Scheibe die Verstellschrägen (78) als spiralförmige Gleitflächen für die Messerhalter (76) ausgebildet sind.

7.) Schälmaschine nach Anspruch 1 und 3, dadurch gekennzeichnet, daß

a) das Getriebe (81) ein Differential-Planetengetriebe ist,

b) bei dem mindestens ein Planetenrad (70) drehbar in der Buchse (65) gelagert ist,

c) wobei dieses Planetenrad mit 2 Sonnenrädern (71, 72) kämmt,

d) wovon eines mit den spiralförmigen Verstellschrägen (78) für die Schälmesser starr verbunden ist und das zweite über die Hohlwelle (63) mit dem Messerkopf (83) selbst starr verbunden ist.

8.) Schälmaschine nach Anspruch 1, dadurch gekennzeichnet, daß beidseits des in der Nähe der Schälmesser (75) gelegenen Hohlwellenlagers (67) Teile des Getriebes zur Messerverstellung angeordnet sind.

-5-

9.) Schälmaschine nach Anspruch 8, dadurch gekennzeichnet, daß das im Maschinengehäuse gelagerte Zwischenrad, das mit der Hohlwelle selbst in Eingriff steht, zwischen den Hohlwellenlagern (67,68) in einen Zahnkranz an der Hohlwelle eingreift.

10.) Schälmaschine nach Anspruch 1, mit einem als Differential-Planetengetriebe ausgebildeten Untersetzungsgetriebe (14), dadurch gekennzeichnet, daß das gesamte Untersetzungsgetriebe zwischen den Hohlwellenlagern (3,4) angeordnet ist, wobei zwischen dem vorderen Hohlwellenlager (3)und der Hohlwelle (5) eine gegenüber der Hohlwelle und dem Lager (3) drehbare Hülse (48) durchgeführt ist, die mit den Verstellschrägen (11 bis 13) für die Schälmesser (7,8) starr verbunden ist.

11.) Schälmaschine nach Anspruch 3, dadurch gekennzeichnet, daß die Planetenräder (15,16,17) die Hohlwelle (5) umschließen.

12.) Schälmaschine nach Anspruch 3, dadurch gekennzeichnet, daß das Untersetzungsgetriebe (49) zwei Abtriebe (Hülse 48, Überwurf 49) aufweist, wovon einer mit den Verstellschrägen (10,11) verbunden ist und der zweite mit dem Messerkopf (6) verbunden ist.

Fig.1

Fig.2

0047362 2/6

Fig. 3

**Fig. 4**

## Fig.5

Fig. 6

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 1 334 278 (SCHUMAG) | 1,2 |
| | FR - A - 1 578 355 (REIKA) | 1,2 |
| | FR - A - 2 126 636 (ORBIT) | 1,2 |
| | DE - A - 2 904 483 (KOBE) | 1,2 |
| | * Seite 8, Zeile 16 bis Seite 12, Zeile 23; Figuren * | |
| | --- | |
| | CH - A - 260 918 (SCHRAG) | 1 |
| | DE - C - 670 703 (VOMAG) | 1 |
| A | DE - C - 956 007 (CALOW) | 1 |
| A | GB - A - 5112 AD 1915 (LUMSDEN) | 1 |
| | - - - - - - - - - | |

**KLASSIFIKATION DER ANMELDUNG (Int. Cl.³)**

B 23 B 5/12

**RECHERCHIERTE SACHGEBIETE (Int. Cl.³)**

B 23 B 5/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 18.12.1981 | HORVATH |